# EUROPEAN PATENT SPECIFICATION

(11) **EP 4 117 265 B1**
(45) Date of publication and mention of the grant of the patent: **31.12.2025**
(21) Application number: 21765255.1
(22) Date of filing: 04.03.2021
(51) Int. Cl.: H04M 11/04, G08B 17/00, G08B 25/10, G06F 1/3212, G06F 3/0481, G06F 3/0482, G06F 3/0488, G08B 29/06, G08B 29/10

(54) **DISPLAY SYSTEM, DISPLAY METHOD, AND PROGRAM**
ANZEIGESYSTEM, ANZEIGEVERFAHREN UND PROGRAMM
SYSTÈME, PROCÉDÉ ET PROGRAMME D'AFFICHAGE

(30) Priority: 06.03.2020 JP 2020039354
(43) Date of publication of application: 11.01.2023
(73) Proprietor: Panasonic Intellectual Property Management Co., Ltd., Osaka-shi, Osaka 540-6207 (JP)
(72) Inventor: LI, Guochen, Osaka-shi, Osaka 540-6207 (JP); KURIHARA, Fumikazu, Osaka-shi, Osaka 540-6207 (JP)
(74) Representative: Appelt, Christian W.
(86) International application number: PCT/JP2021/008384
(87) International publication number: WO 2021/177396

(56) References cited:
- JP-A- 2005 242 705
- JP-A- 2017 016 700
- JP-A- 2019 071 131
- JP-A- 2019 207 502

## Description

### [TECHNICAL FIELD]

The present disclosure relates to display technology and, more particularly, to a display system, display method, and program.

### [BACKGROUND ART]

Fire alarms are provided in a facility such as building. When the fire alarm detects a fire, the fire alarm transmits a fire signal to a server. A mobile terminal apparatus communicates with the server and displays support information regarding the fire (see, for example, JP6240744 B1).

JP 2005-242705 A discloses a centralized management system including a plurality of output systems for transmitting alarm signals to different external institutions.

### [SUMMARY OF INVENTION]

### [TECHNICAL PROBLEM]

Displaying a notification from a fire alarm in the mobile terminal apparatus makes it possible to check the notification. However, there are cases in which the notification is desired to be checked immediately and cases in which the notification cannot be checked immediately. It is therefore preferred to adjust the timing to check a notification.

The present disclosure addresses the above-described issue, and a purpose thereof is to provide a technology of adjusting the timing of display of a notice.

### [SOLUTION TO PROBLEM]

A display system according to claim 1 includes: an input unit that is configured to receive event information from a fire alarm provided in a facility; a setting unit that enables or disables a notice for communicating that the event information is available when the input unit receives the event information; and a display control unit that causes a display unit to display the notice when the setting unit enables a notice and when the input unit receives the event information, wherein the display control unit causes the display unit to display a history of the event information received by the input unit regardless of whether a notice is enabled or disabled by the setting unit,wherein the event information includes information on fire incident, information on operation test, and information on maintenance.

A method according to claim 6 includes: receiving event information from a fire alarm provided in a facility; enabling or disabling a notice for communicating that the event information is available when event information is received; and causing a display unit to display the notice when a notice is enabled and when the event information is received, causing the display unit to display a history of the received event information regardless of whether a notice is enabled or disabled,wherein the event information includes at least one of information on fire incident, information on operation test, and information on maintenance.

A program according to claim 7 comprising computer-implemented modules includes :a module that is configured to receive event information from a fire alarm provided in a facility and a module that enables or disables a notice for communicating that the event information is available when event information is received; and a module that causes a display unit to display the notice when a notice is enabled and when the event information is received and causes the display unit to display a history of the received event information regardless of whether a notice is enabled or disabled, wherein the event information includes at least one of information on fire incident, information on operation test, and information on maintenance.

Optional combinations of the aforementioned constituting elements, and implementations of the present disclosure in the form of devices, systems, computer programs, recording mediums recording computer programs, etc. may also be practiced as additional modes of the present invention.

### [ADVANTAGEOUS EFFECTS OF INVENTION]

According to the present disclosure, the timing of display of a notification can be adjusted.

### [BRIEF DESCRIPTION OF DRAWINGS]

Fig. 1 shows a configuration of a control system according to the embodiment;
Fig. 2 shows a data structure of a status table stored in the storage unit of Fig. 1;
Figs. 3A-3D show screens displayed on the display unit of Fig. 1;
Figs. 4A-4B show a summary of the setting made in the mobile terminal apparatus of Fig. 1;
Figs. 5A-5D show screens displayed on the display unit of Fig. 1;
Figs. 6A-6B show a summary of the setting made in the controller of Fig. 1;
Fig. 7 is a sequence chart showing a display procedure executed by the display system of Fig. 1; and
Fig. 8 is a sequence chart showing another display procedure executed by the control system of Fig. 1.

### [DESCRIPTION OF EMBODIMENTS]

A summary of the embodiment will be given before describing the embodiment of the present disclosure in specific details. The embodiment relates to a control system for displaying information related to each of a plurality of sensors provided in a facility such as a house. The plurality of sensors are exemplified by fire alarms. The plurality of fire alarms are connected to a controller provided in the facility and transmit alarm information to a controller when a fire is detected and transmits failure information to the controller when a failure is detected. Further, the plurality of fire alarms are driven by batteries and transmit a battery level to the controller. The controller is connected to a server outside the facility via a network and transmits the alarm information, failure information, and battery level (hereinafter, generically referred to as "information") to the server. The server can be accessed from an information terminal apparatus such as a smartphone. The information terminal apparatus or the controller is a display apparatus and can display each of the plurality of items of information. Meanwhile, the user may want to check a notice of information immediately or cannot check a notice of information because the user is attending a meeting, for example. In order to adjust the timing of display of a notice, the embodiment is configured to set whether to display a notice on the screen of the display apparatus.

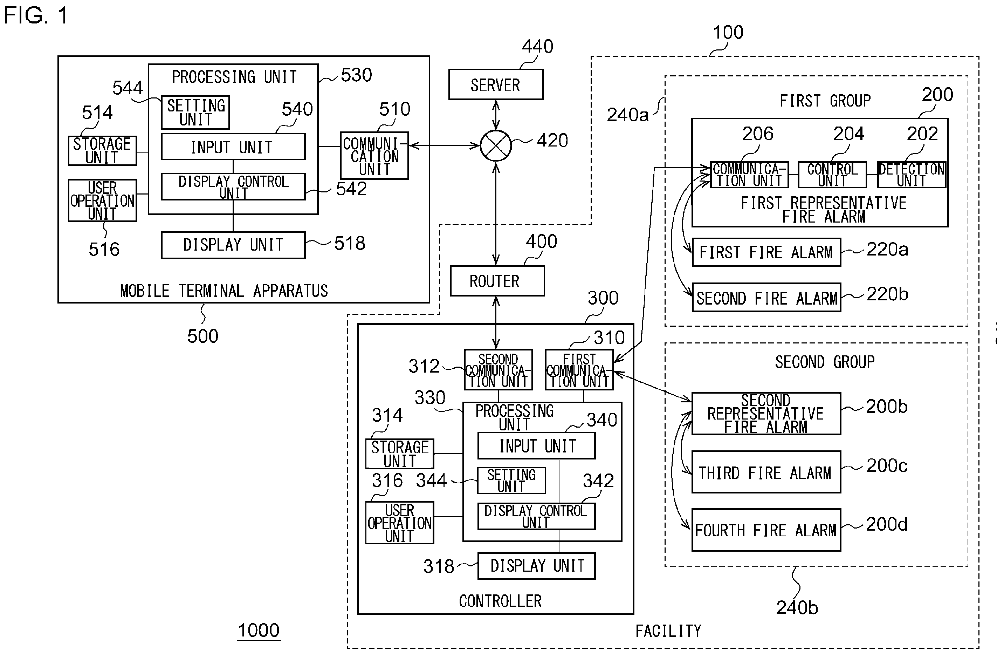

Fig. 1 shows a configuration of a control system 1000. The control system 1000 includes a first representative fire alarm 200a and a second representative fire alarm 200b, which are generically referred to as representative fire alarms 200, a first fire alarm 220a, a second fire alarm 220b, a third fire alarm 220c, and a fourth fire alarm 220d, which are generically referred to as fire alarms 220, a controller 300, a router 400, a network 420, a server 440, and a mobile terminal apparatus 500. The number of representative fire alarms 200 is assumed to be but not limited to "2", and the number of fire alarms 220 is assumed to be but not limited to "4".

The representative fire alarm 200 includes a detection unit 202, a control unit 204, and a communication unit 206. The controller 300 includes a first communication unit 310, a second communication unit 312, a storage unit 314, a user operation unit 316, a display unit 318, and a processing unit 330. The processing unit 330 includes an input unit 340, a display control unit 342, and a setting unit 344. The mobile terminal apparatus 500 includes a communication unit 510, a storage unit 514, a user operation unit 516, a display unit 518, and a processing unit 530. The processing unit 530 includes an input unit 540, a display control unit 542, and a setting unit 544.

The representative fire alarm 200, the fire alarm 220, the controller 300, and the router 400 are provided in the facility 100. The network 420 and the server 440 are provided outside the facility 100. The facility 100 is a building subject to control by the control system 1000 and is exemplified by an independent housing. The facility 100 is not limited to an independent housing and may be a housing in a multi-unit apartment building, an office building, a commercial facility, etc. The representative fire alarm 200 and the fire alarm 220 are provided as a sensor for detecting the occurrence of a fire in each of a plurality of rooms in the facility 100. The representative fire alarm 200 and the fire alarm 220 communicate wirelessly with the controller 300. For example, specified low power radio is used for wireless communication, but the embodiment is not limited to this. The fire alarms may communicate by wire.

Wireless communication between the representative fire alarm 200, the fire alarm 220 and the controller 300 will be described in further detail. The representative fire alarms 200 and the fire alarms 220 are organized into a first group 240a and a second group 240b, which are generically referred to as groups 240. The first group 240a includes the first representative fire alarm 200a, the first fire alarm 220a, and the second fire alarm 220b. The second group 240b includes the second representative fire alarm 200b, the third fire alarm 220c, and the fourth fire alarm 220d. In other words, one group includes one representative fire alarm 200 and one or more fire alarm 220.

The representative fire alarm 200 communicates wirelessly with the controller 300 by using the first frequency band such as the 926 MHz band and also communicates wirelessly with the fire alarm 220 by using the second frequency band such as the 426 MHz band. Meanwhile, the fire alarm 220 communicates wirelessly with the representative fire alarm 200 by using the second frequency band such as the 426 MHz band but does not directly communicate wirelessly with the controller 300. The fire alarm 220 communicates wirelessly with the controller 300 via the representative fire alarm 200. Therefore, the representative fire alarm 200 also has the function of relaying wireless communication between the controller 300 and the fire alarm 220 in addition to the function of communicating wirelessly with the controller 300.

The representative fire alarm 200 and the fire alarm 220 differ in the availability of the relaying function and are otherwise identical in the function of detecting a fire, etc. Therefore, the representative fire alarm 200 may be referred to as the fire alarm 220 when a description is given of a feature other than wireless communication.

The representative fire alarm 200 is a sensor capable of detecting the occurrence of a fire in a room, etc. of the facility 100. The detection unit 202 of the representative fire alarm 200 detects the occurrence of a fire by detecting the smoke or detecting the heat. In the case of smoke-based detection for detecting the smoke, the occurrence of a fire is detected as the smoke enters the representative fire alarm 200, and the light of the light emitting diode is reflected by particles of the smoke and reaches the light receiving unit. In the case of heat-based detection for detecting the heat, the occurrence of a fire is detected as the heat sensitive element reaches a certain temperature. When the detection unit 202 detects the occurrence of a fire, the control unit 204 outputs a sound for communicating a fire incident from a speaker (not shown) and generates alarm information for communicating the fire incident. The alarm information includes at least one of fire incident and operation test. Fire incident indicates the occurrence of a fire, and operation test indicates a forced sounding of an alarm by an operation test. The communication unit 206 transmits the alarm information to the controller 300 in the first frequency band. In that process, the communication unit 206 may transmit the alarm information to the fire alarm 220 in the second frequency band.

The control unit 204 detects a failure or a speaker disconnection in the representative fire alarm 200. A publicly known technology may be used for the detection, and a description thereof is omitted. The control unit 204 further includes a timekeeping function and measures the period of time since the manufacturing or since the previous maintenance. When a failure or speaker disconnection is detected, the control unit 204 generates failure information including failure/disconnection, which indicates a failure or speaker disconnection, and generates failure information including elapse of 10 years, indicating that 10 years have elapsed, when it is detected that 10 years have elapsed. The failure information may include failure/disconnection and elapse of 10 years. The communication unit 206 transmits the failure information to the controller 300 in the first frequency band.

Further, the detection unit 202 detects the level of the battery that drives the representative fire alarm 200. A publicly known technology may be used for the detection of a battery level, and a description thereof is omitted. The battery levels of, for example, 80%, 50%, etc. are shown. When the battery level detected by the detection unit 202 changes, the control unit 204 cause the communication unit 206 to transmit the battery level to the controller 300 in the first frequency band. The battery level may be transmitted only when it changes by a predetermined amount (e.g., 5%) instead of ever time the battery level changes.

The configuration of the fire alarm 220 is similar to the configuration of the representative fire alarm 200, but the communication unit 206 (not shown) of the fire alarm 220 transmits the alarm information, failure information, and battery level in the second frequency band. The destination of the alarm information and failure information is the representative fire alarm 200 but may include other fire alarms 220. The destination of the battery level is the representative fire alarm 200.

When the communication unit 206 of the representative fire alarm 200 receives the alarm information, failure information, and battery level in the second frequency band from the fire alarm 220 in the relaying process, the communication unit 206 transmits the alarm information, failure information, and battery level to the controller 300 in the first frequency band. Further, the representative fire alarm 200 or the fire alarm 220 may output a sound for communicating the occurrence of a fire from a speaker (not shown) upon receiving the alarm information including fire incident.

As described above, the first communication unit 310 of the controller 300 is compatible with, for example, specified low power radio and receives the alarm information and failure information from the representative fire alarm 200. The alarm information includes identification information (hereinafter, "sensor identification information") for identifying the representative fire alarm 200 or the fire alarm 220 transmitting the information. The first communication unit 310 outputs the alarm information and failure information to the processing unit 330. The first communication unit 310 receives the battery level from the representative fire alarm 200. The battery level also includes the sensor identification information. The first communication unit 310 outputs the battery level of the processing unit 330.

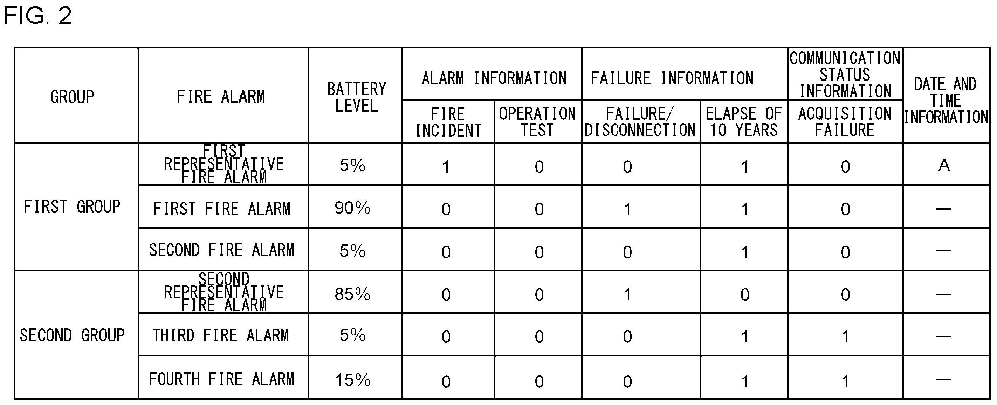

The processing unit 330 stores the alarm information, failure information, and battery level received in the storage unit 314. The storage unit 314 stores the alarm information, failure information, and battery level for each sensor identification information. This is equivalent to storing the alarm information, failure information, and battery level for each sensor. Fig. 2 shows a data structure of a status table stored in the storage unit 314. The table already registers that the first representative fire alarm 200a, the first fire alarm 220a, and the second fire alarm 220b are included in the first group 240a and that the second representative fire alarm 200b, the third fire alarm 220c, and the fourth fire alarm 220d are included in the second group 240b. The values of battery level of the representative fire alarms 200 and the fire alarms 220 are indicated. When the alarm information including fire incident is received, "1" is entered in "fire incident". When alarm information including fire incident is not received, "0" is entered in "fire incident". The same is true of operation test in the alarm information, failure/disconnection and elapse of 10 years in the failure information. Date and time information indicates the date and time when an alarm is originated. Date and time information is generated by the representative fire alarm 200 or the fire alarm 220 and is included in the alarm information. Reference is made back to Fig. 1.

The processing unit 330 causes the first communication unit 310 to periodically transmit a check signal for checking connection to each of the representative fire alarms 200 and the fire alarms 220. Upon receiving the check signal, the representative fire alarm 200 and the fire alarm 220 transmit a reply signal for indicating a reply to the check signal to the controller 300. The reply signal also includes the sensor identification information. Transmission of a check signal to and reception of a reply signal from the fire alarm 220 are performed via the representative fire alarm 200.

Upon receiving a reply signal, the first communication unit 310 of the controller 300 outputs the reply signal to the processing unit 330. Through these steps, the processing unit 330 determines that it is possible to communicate with the representative fire alarm 200 or the fire alarm 220 receiving the reply signal in response to the check signal. Meanwhile, the processing unit 330 determines that it is not possible to communicate with the representative fire alarm 200 or the fire alarm 220 for which a reply signal in response to a check signal is not received for a predetermined period of time. The processing unit 330 stores, for each sensor identification information, communication status information indicating whether communication is enabled or disabled. In the status table shown in Fig. 2, "1" in the "acquisition failure" field of the "communication status information" means communication is disabled, and "0" in the "acquisition failure" field of the "communication status information" means communication is enabled.

Hereinafter, the screens for displaying information related to the representative fire alarm 200 and the fire alarm 220 will be described in the order of (1) the screen displayed on the mobile terminal apparatus 500, (2) the screen for push notice displayed on the mobile terminal apparatus 500, (3) the screen displayed on the controller 300, and (4) the screen for push notification displayed on the controller 300. In this embodiment, at least one of these screens may be displayed.

### (1) Screen displayed on the mobile terminal apparatus 500

The second communication unit 312 performs, for example, wireless communication or communication by wire and is connected to the server 440 via the router 400 and the network 420. For example, wireless local area network (LAN) is used for wireless communication, but the embodiment is not limited thereto. When any of the alarm information, failure information, communication status information, and battery level stored in the storage unit 314 is changed, the second communication unit 312 transmits the changed information to the server 440. The information transmitted from the second communication unit 312 includes facility identification information for identifying the facility 100 in addition to the sensor identification information. Upon receiving the information, the server 440 stores one of the alarm information, failure information, communication status information, and battery level for each facility identification information and sensor identification information. Through these steps, the status table in the server 440 is synchronized with the status table of the storage unit 314 with a delay of a predetermined period of time.

The mobile terminal apparatus 500 is, for example, a smartphone, a tablet terminal apparatus, and a mobile terminal apparatus and is used by the user residing in the facility 100. The communication unit 510 of the mobile terminal apparatus 500 is connected to the server 440 via the network 420 by performing wireless communication. For example, a mobile phone system such as long term evolution (LTE) or wireless LAN is used for wireless communication, but the embodiment is not limited thereto. The storage unit 514 stores a program executable in the mobile terminal apparatus 500. For example, the storage unit 514 stores an application program. In this embodiment, an application program capable of executing the process in the control system 1000 (hereinafter, "control system application") is highlighted.

The user operation unit 516 is exemplified by a touch panel and can receive a user operation input from a user. When the user operation unit 516 receives a user operation input of a user, the user operation unit 516 outputs a user operation signal determined by the user operation input to the processing unit 530. The display unit 518 displays a screen generated by the display control unit 542. The display unit 518 may be integrated with the user operation unit 516. The display unit 518 displays a screen including a button, and the user operation unit 516 receives a user operation input provided by a touch of the user on the button.

The processing unit 530 is comprised of, for example, a microcomputer including a processor and a memory. The functions of the processing unit 530 are realized by the computer system as the processor executes the program stored in the storage unit 514. The processing unit 530 according to the embodiment executes the control system application. The screen generated by executing the control system application is displayed on the display unit 518. As the user uses the user operation unit 516 while viewing the displayed screen, the processing unit 530 transmits a signal (hereinafter, "event information request signal") for requesting transmission of information to the server 440 via the communication unit 510 and the network 420. The event information request signal includes identification information for identifying the mobile terminal apparatus 500 (hereinafter, "terminal identification information").

Upon receiving the event information request signal, the server 440 extracts the terminal identification information from the event information request signal. Further, the server 440 stores the correspondence between the terminal identification information and the facility identification information in advance and identifies the facility identification information from the extracted terminal identification information, based on the correspondence. The server 440 transmits the status table of the facility identification information thus identified to the mobile terminal apparatus 500 via the network 420. The status table may be included in the event information.

The communication unit 510 of the mobile terminal apparatus 500 receives the status table from the server 440 via the network 420. The processing unit 530 causes the storage unit 514 to store the status table received by the communication unit 510. The input unit 540 of the processing unit 530 receives the information on each of the representative fire alarms 200 and the fire alarms 220 from the storage unit 514. The information is comprised of, for example, alarm information, failure information, communication status information, and battery level, and the alarm information includes information indicating the date and time of the alarm.

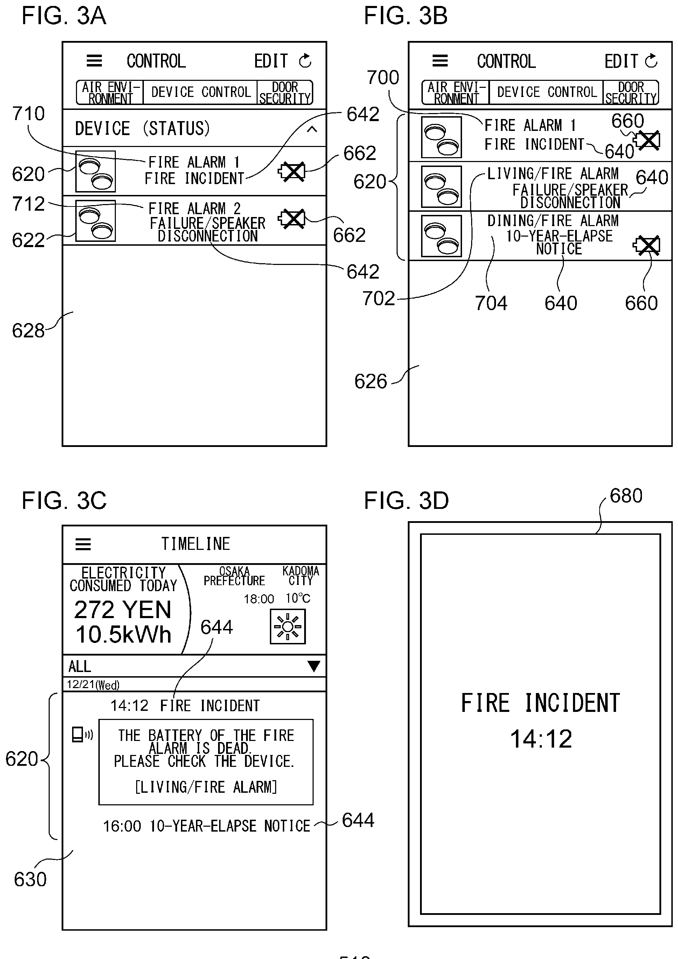

The display control unit 542 generates a screen for displaying the information received by the input unit 540 on the display unit 518. Figs. 3A-3D will be used to explain the screens generated by the display control unit 542. Figs. 3A-3D show screens displayed on the display unit 518. Fig. 3A shows a screen showing representative information representative of each of the groups, Fig. 3B shows a screen showing detailed information on one group, and Fig. 3C shows a screen for timeline showing a history of information. The screens shown in Figs. 3A-3C are displayed as the user uses the user operation unit 516 of the mobile terminal apparatus 500. Denoting the area for showing detailed information on one group as a "first area 628", the area for showing the representative information representative of each of the groups is referred to as a "second area 626", and the area for showing a timeline is referred to as a "second area 630". Therefore, Fig. 3A corresponds to a screen including the first area 628, Fig. 3B corresponds to a screen including the second area 626, and Fig. 3C corresponds to a screen including the second area 630.

As shown in Fig. 3A, the display control unit 542 generates a screen so that a first portion 620 and a second portion 622 are included in the first area 628 in the same screen. More specifically, the display control unit 542 generates a screen in which the first portion 620 and the second portion 622 are arranged vertically. The first portion 620 is a portion for showing the information related to the first group 240a, and the second portion 622 is a portion for showing the information related to the second group 240b. The display control unit 542 provides a first group display field 710 in the first portion 620 and shows the name "fire alarm 1" of the first representative fire alarm 200a, a first message notice 642, and a first dead battery notice 662 in the first group display field 710. Further, the display control unit 542 provides a second group display field 712 in the second portion 622 and shows the name "fire alarm 2" of the second representative fire alarm 200b, a first message notice 642, and a first dead battery notice 662 in the second group display field 712. The detail of the representative information on the first group 240a and the representative information on the second group 240b such as the first message notice 642, the first dead battery notice 662 will be described later.

A touch on the display portion of the "first alarm 1" in the first portion 620 by the user causes the user operation unit 516 to receive an instruction for transition to the screen showing the detailed information on the first group 240a. In response to this, the display control unit 542 generates a screen as shown in Fig. 3B so that the first portion 620 is included in the second area 626. The display control unit 542 provides a first representative fire alarm display field 700, a first fire alarm display field 702, and a second fire alarm display field 704 in the first portion 620. The name "fire alarm 1" of the first representative fire alarm 200a is shown in the first representative fire alarm display field 700, and the name "living/fire alarm" of the first fire alarm 220a is shown in the first fire alarm display field 702. Further, the name "dining/fire alarm" of the second fire alarm 220b is shown in the second fire alarm display field 704.

When at least one of the alarm information, failure information, and communication status information related to the first representative fire alarm 200a of the first group 240a is received, the display control unit 542 causes the second message notice 640 to be displayed in the first representative fire alarm display field 700 in the first portion 620. When at least one of the alarm information, failure information, and communication status information related to the first fire alarm 220a of the first group 240a is received, the display control unit 542 causes the second message notice 640 to be displayed in the first fire alarm display field 702 in the first portion 620. When at least one of the alarm information, failure information, and communication status information related to the second fire alarm 220b of the first group 240a is received, the display control unit 542 causes the second message notice 640 to be displayed in the second fire alarm display field 704 in the first portion 620. When none of the alarm information, failure information, and communication status information is received, on the other hand, the display control unit 542 does not cause the second message notice 640 to be displayed.

The second message notice 640 is a notice to communicate the alarm information, failure information, and communication status information related to the corresponding representative fire alarm 200, the fire alarm 220 is received. When fire incident in the alarm information, operation test in the alarm information, failure/disconnection in the failure information, elapse of 10 years in the failure information is received, for example, the second message notice 640 indicates "fire incident", "forced alarm sounding", "failure/speaker disconnection", and "10-year-elapse notice", respectively. Referring to Fig. 3B, the second message notice 640 in the first representative fire alarm display field 700 indicates "fire incident", showing that fire incident in the alarm information related to the first representative fire alarm 200a is received. The second message notice 640 in the first fire alarm display field 702 indicates "failure/speaker disconnection", showing that failure/disconnection in the failure information related to the first fire alarm 220a is received. Further, the second message notice 640 in the second fire alarm display field 704 indicates "10-year-elapse notice", showing that elapse of 10 years in the failure information related to the second fire alarm 220b is received.

The display control unit 542 maintains a threshold value that should be compared with the battery level. For example, the display control unit 542 maintains a first threshold value and a second threshold value (first threshold value>second threshold value). By way of example, the first threshold value is "20%", and the second threshold value is "10%". When the battery level is lower than the first threshold value and equal to or higher than the second threshold value, the display control unit 542 determines that battery is consumed. When the battery level is lower than the second threshold value, the display control unit 542 determines that the battery is dead. The display control unit 542 causes a second battery consumption notice (not shown) to be displayed in the first portion 620 in association with the representative fire alarm 200, the fire alarm 220 for which it is determined that the battery is consumed and causes a second dead battery notice 660 to be displayed in the first portion 620 in association with the representative fire alarm 200, the fire alarm 220 for which it is determined that the battery is dead. The second battery consumption notice is a notice for indicating that the battery is consumed, and the second dead battery notice 660 is a notice for indicating that the battery is dead.

In this case, the battery level of the first representative fire alarm 200a and the second fire alarm 220b is lower than the second threshold value so that the second dead battery notice 660 is shown in the first representative fire alarm display field 700 and the second fire alarm display field 704. Meanwhile, the battery level of the first fire alarm 220a is equal to or higher than the first threshold value so that the second battery consumption notice or the second dead battery notice 660 is not shown in the first fire alarm display field 702. The second battery consumption notice and the second dead battery notice 660 are generically referred to as "second battery level notice", and it can be said that the second battery level notice is a notice for indicating that the battery level is lower than a threshold value.

A user's touch on the display portion for the "fire alarm 2" in the second portion 622 of Fig. 3A causes the user operation unit 516 to receive an instruction for transition to the screen showing the detailed information on the second group 240b. Illustration of this screen will be omitted, but the display control unit 542 generates a screen similar to that of Fig. 3B. In that screen, the second portion 622 is included in the second area 626. The display control unit 542 provides a second representative fire alarm display field, a third fire alarm display field, and a fourth fire alarm display field in the second portion 622. The name "fire alarm 2" of the second representative fire alarm 200b is shown in the second representative fire alarm display field, the name of the third fire alarm 220c is shown in the third fire alarm display field, and the name of the fourth fire alarm 220d is shown in the fourth fire alarm display field. Further, the second message notice 640, the second dead battery notice 660, etc. are shown as already described.

Thus, the first portion 620 of the second area 626, the second portion 622 of the second area 626, and the first area 628 are included in mutually different screens. Further, it is possible to make a transition from the screen including the first area 628 to the screen including the first portion 620 of the second area 626, and it is also possible to make a transition to the screen including the second portion 622 of the second area 626.

Referring back to Fig. 3A, the detail of the representative information on the first group 240a will be described. When the display control unit 542 shows at least one second message notice 640 in the first portion 620 of the second area 626 shown in Fig. 3B, the display control unit 542 causes the first message notice 642 to be displayed in the first group display field 710. When the display control unit 542 does not show the second message notice 640 in the first portion 620 of the second area 626 shown in Fig. 3B, the display control unit 542 does not cause the first message notice 642 to be displayed in the first group display field 710. In this case, the second message notice 640 is shown in the first representative fire alarm display field 700, the first fire alarm display field 702, and the second fire alarm display field 704 in the first portion 620 of the second area 626. Therefore, the first message notice 642 is shown in the first group display field 710.

However, the first representative fire alarm display field 700, the first fire alarm display field 702, and the second fire alarm display field 704 in the first portion 620 of the second area 626 differ in the content of the second message notice 640. This is equivalent to the reception of fire incident, failure/disconnection, and elapse of 10 years in association with the first representative fire alarm 200a and the fire alarms 220 included in the first group 240a. The display control unit 542 assigns the highest degree of priority to fire incident and assigns progressively lower degrees of priority to operation test, failure/disconnection, and elapse of 10 years. The display control unit 542 assigns the lowest degree of priority to acquisition failure. When the input unit 540 receives a plurality of items of information, the display control unit 542 selects the information with the highest degree of priority. In this case, fire incident is selected. The display control unit 542 causes "fire incident" thus selected to be displayed as the first message notice 642 in the first group display field 710 in the first portion 620 of the first area 628 of Fig. 3A. In other words, the first message notice 642 is a notice to indicate the presence of information with a higher degree of priority when a plurality of items of information are received.

When the display control unit 542 shows at least one second battery level notice in the first portion 620 of the second area 626 shown in Fig. 3B, the display control unit 542 causes the first battery level notice for indicating the presence of at least one battery level notice to be displayed in the first group display field 710. When only the second battery consumption notice is shown in the first portion 620 of the second area 626, the first battery consumption notice is shown in the first group display field 710. When only the second dead battery notice 660 is shown in the first portion 620 of the second area 626, the first dead battery notice 662 is shown in the first group display field 710. In other words, the second battery level notice shown in the first portion 620 of the second area 626 is identical to the first battery level notice shown in the first group display field 710.

Assuming that the second battery consumption notice and the second dead battery notice 660 are shown in the first portion 620 of the second area 626, the first dead battery notice 662 is shown in the first group display field 710. When the display control unit 542 does not show at least one second battery level notice in the first portion 620 of the second area 626, on the other hand, the display control unit 542 does not cause the first battery level notice to be displayed in the first group display field 710. In this case, the second dead battery notice 660 is shown in the first representative fire alarm display field 700 and the second fire alarm display field 704 in the first portion 620 of the second area 626, and so the first dead battery notice 662 is shown in the first group display field 710. The first message notice 642 and the second battery level notice that can be displayed in the first group display field 710 are the representative information on the first group 240a. The representative information on the second group 240b is shown in the second group display field 712, and a description thereof is omitted since it is similar to the representative information on the first group 240a.

Fig. 3C shows s a screen for timeline generated by the display control unit 542. The screen for timeline is a screen that includes the first portion 620 in the second area 630 and is a screen that shows a history of information related to one of the representative fire alarm 200 and the fire alarms 220. In this example, a history of information related to the first representative fire alarm 200a is shown by way of example. A transition to the timeline screen like this can be made from the screen that shows the detailed information on one group, i.e., from the screen of Fig. 3B showing the second area 626. Alternatively, a transition to the timeline screen may be made from the screen showing the representative information on each group, i.e., from the screen of Fig. 3A showing the first area 628.

The first portion 620 of the second area 630 of Fig. 3C shows all second message notices 644 related to the first representative fire alarm 200a. In this example, two second message notices 644 are shown by way of example. The two second message notices 644 indicate "fire incident" and "10-year-elapse notice". When two or more items of information are received in association with the first representative fire alarm 200a, the display control unit 542 selects the information with the highest degree of priority in accordance with the degree of priority described above. Further, the display control unit 542 displays a message corresponding to the selected information in the second message notice 640 in the first representative fire alarm display field 700 of Fig. 3B. Still further, when the display control unit 542 determines that the battery of the first representative fire alarm 200a is consumed or dead, the display control unit 542 shows a history of the first representative fire alarm 200a thus determined in the timeline screen.

The display control unit 542 equally generates a screen for timeline similar to that of Fig. 3C in association with the first fire alarm 220a and the second fire alarm 220b included in the first group 240a. Further, the display control unit 542 equally generates a screen for timeline in association with the second representative fire alarm 200b, the third fire alarm 220c and the fourth fire alarm 220d included in the second group 240b. The screen for timeline is a screen that includes the second portion 622 in the second area 630 and is a screen that shows a history of information related to one of the representative fire alarm 200 and the fire alarms 220. Fig. 3D will be described later, and reference is made back to Fig. 1.

As described above, the representative fire alarm 200 communicates directly with the controller 300, but the fire alarm 220 communicates with the controller 300 via the representative fire alarm 200. Therefore, when communication of the representative fire alarm 200 is disabled, communication of the fire alarm 220 connected to the representative fire alarm 200 is also disabled. When communication of the fire alarm 220 is disabled, on the other hand, the other fire alarms 220 and the representative fire alarm 200 are not affected. In other words, the impact from disabled communication of the representative fire alarm 200 is larger than the impact from disabled communication of the fire alarm 220. When communication of the representative fire alarm 200 is disabled, therefore, the display control unit 542 may display that communication with the representative fire alarm 200 is disabled on the display unit 518 in addition to or apart from the display of "acquisition failure" in the first message notice 642 and the second message notice 640.

### (2) Screen for push notice displayed on the mobile terminal apparatus 500

A description has been given of a case where the user operation in the user operation unit 516 of the mobile terminal apparatus 500 causes a screen for notice to be displayed on the display unit 518. Meanwhile, there are cases where it is desired to display a screen for notice (hereinafter, "push notice") on the display unit 518 even in the absence of a user operation, when event information such as alarm information, failure information, etc. occurs. It is desired that a push notice like this be enabled or disabled according to the user setting. A description will be given of a process of realizing this.

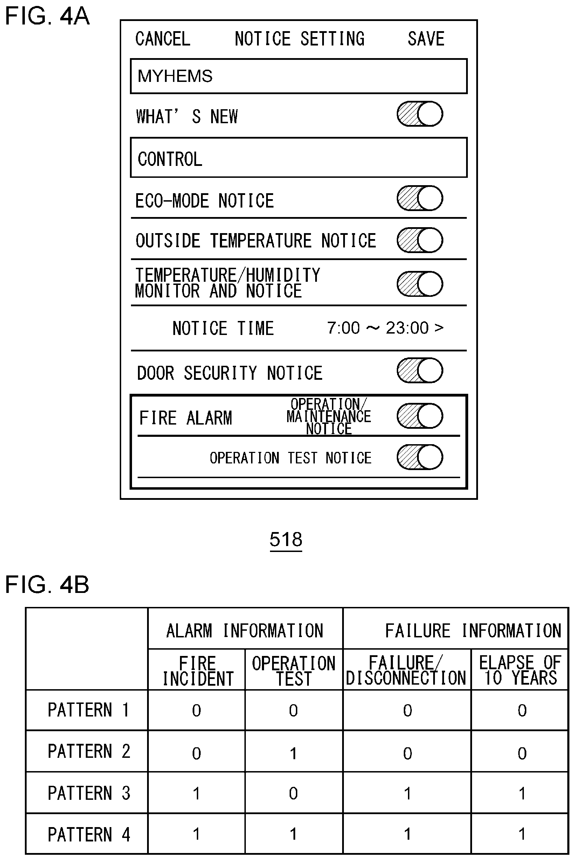

When the user uses the user operation unit 516, the display control unit 542 causes a setting screen in the control system application to be displayed on the display unit 518. Figs. 4A-4B show a summary of the setting made in the mobile terminal apparatus 500. Fig. 4A shows a setting screen displayed on the display unit 518. In the setting screen, each of a plurality of items can be set to "ON" or "OFF". In particular, "operation/maintenance notice" and "operation test notice" of the "fire alarm" can be set to "ON" or "OFF" in this embodiment.

Event information includes information on fire incident of fire incident information, operation test of fire incident information, failure/disconnection of failure information, and elapse of 10 years of failure information. Event information may include at least one of these items of information. In "operation/maintenance notice" in Fig. 4A, a push notice for communicating fire incident, failure/disconnection, elapse of 10 years is enabled or disabled. To "enable" a push notice, "operation/maintenance notice" is set to "ON". To disable a push notice, "operation/maintenance" is set to "OFF". Further, a push notice for communicating that an operation test is available is enabled or disabled in "operation test notice". The user uses the user operation unit 516 to set "ON" or "OFF".

The setting unit 544 enables or disables a notice for communicating that the event information is available when the event information is received, by receiving a user operation in the user operation unit 516. In particular, the setting unit 544 enables or disables a notice for communicating fire incident, failure/disconnection, elapse of 10 years and, separately, enables or disables a notice for communicating that an operation test is available. Fig. 4B shows a pattern of setting made in the setting unit 544. In this case, ON is indicated by "1", and OFF is indicated by "0". Pattern 1 is a case where "operation/maintenance notice" and "operation test notice" are set to OFF, and pattern 2 is a case where "operation test notice" is set to ON, and "operation/maintenance notice" is set to OFF. Pattern 3 is a case where "operation/maintenance notice" is set to ON and "operation test notice" is set to OFF. Pattern 4 is a case where "operation/maintenance notice" and "operation test notice" are set to ON. Reference is made back to Fig. 1. When any of pattern 1 through pattern 4 is set, the setting unit 544 causes the communication unit 510 to transmit the setting information indicating the setting result and the terminal identification information to the server 440. When the server 440 receives the setting information and the terminal identification information from the mobile terminal apparatus 500, the server 440 stores the combination.

As described above, the second communication unit 312 of the controller 300 transmits, at a point of time when any of the alarm information, failure information, communication status information, and battery level stored in the storage unit 314 is changed, the changed information to the server 440. The alarm information corresponds to fire incident and operation test, and the failure information corresponds to failure/disconnection and elapse of 10 years. These items of information constitute the event information. It can therefore be said that the second communication unit 312 transmits changed event information to the server 440 when one of event information items is changed.

The server 440 receives the event information from the controller 300. It can be said that the input (not shown) is configured to receive the event information from the representative fire alarm 200 or the representative fire alarm 200. Upon receiving the event information, the server 440 extracts the facility identification information from the event information. Further, the server 440 identifies the terminal identification information from the extracted facility identification information, based on the correspondence between the terminal identification information and the facility identification information. The server 440 refers to the setting information associated with the terminal identification information thus identified and checks the information included in the event information to see whether there is any information for which a notice is set to ON. When the setting information is of pattern 3, for example, the server 440 checks whether the event information includes fire incident or failure/disconnection or elapse of 10 years. If it is not included, the server 440 terminates the process for push notice. When it is included, on the other hand, the server 440 transmits the event information to the mobile terminal apparatus 500 identified by the terminal identification information via the network 420.

The communication unit 510 of the mobile terminal apparatus 500 receives the event information from the server 440. When the communication unit 510 receives the event information, the display control unit 542 displays a notice showing the event information on the display unit 518. The notice is shown like the second message notice 640. Fig. 3D shows a screen for push notice displayed on the display unit 518. A notice window 680 is displayed, and a notice message is shown in the notice window 680. In this case, the event information comprises fire incident so that a message "fire incident" is shown.

In other words, the server 440 includes a display control unit (not shown). When a notice is enabled by the setting unit 544 of the mobile terminal apparatus 500, the display control unit causes, when the input unit receives the event information, the display unit 518 of the mobile terminal apparatus 500 to display a notice. Meanwhile, the display control unit causes the display unit 518 of the mobile terminal apparatus 500 to display a history of event information received by the input unit, i.e., the timeline, through the process described in (1), regardless of whether a notice is enabled or disabled by the setting unit 544 of the mobile terminal apparatus 500. Thus, the provision of the display control unit in the server 440 and the provision of the setting unit 544 in the mobile terminal apparatus 500 cause the server 440 and the mobile terminal apparatus 500 to constitute a display system.

### (3) Screen displayed on the controller 300

Screens displayed on the display unit 518 of the mobile terminal apparatus 500 have been described above. These screens may be displayed on the display unit 318 of the controller 300. The screen displayed on the display unit 518 has been assumed to be a screen more elongated in the vertical direction than in the horizontal direction. In this case, however, a screen more elongated in the horizontal direction than in the vertical direction is assumed as the screen displayed on the display unit 318.

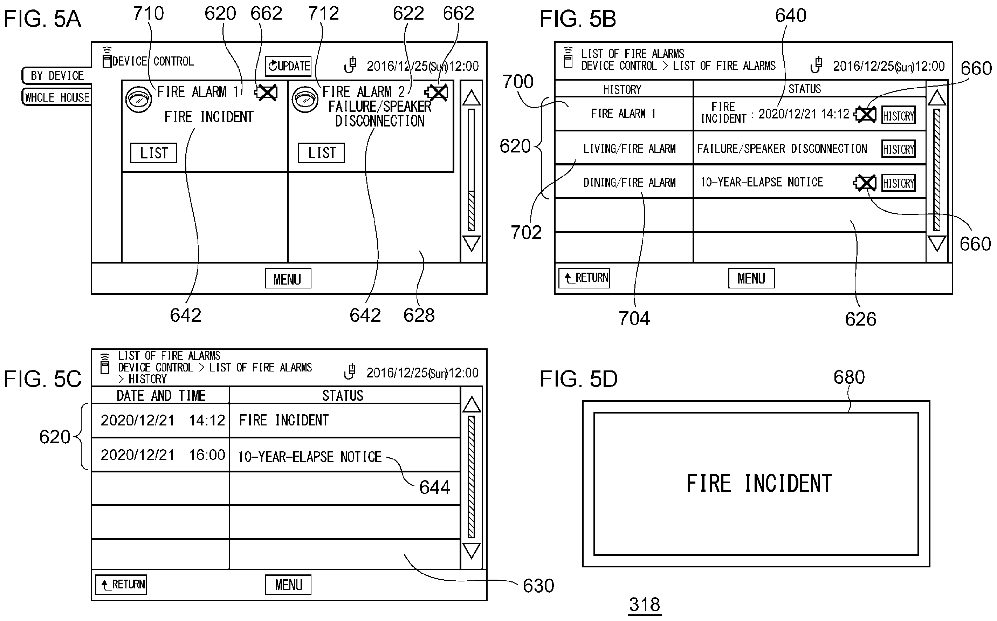

The input unit 340 executes a process similar to that of the input unit 540. The display control unit 342 generates a screen for displaying the information received by the input unit 340 on the display unit 318. Figs. 5A-5D will be used to explain the screen generated by the display control unit 342. Figs. 5A-5D show screens displayed on the display unit 318. Fig. 5A shows a screen showing representative information representative of each of the groups, Fig. 5B shows a screen showing detailed information on one group, and Fig. 5C shows a screen for timeline showing a history of information. In other words, Figs. 5A-5C correspond to Figs. 3A-3C, respectively. Fig. 5A corresponds to a screen including the first area 628, Fig. 5B corresponds to a screen including the second area 626, and Fig. 5C corresponds to a screen including the second area 630.

As shown in Fig. 5A, the display control unit 542 generates a screen so that the first portion 620 and the second portion 622 are included in the first area 628 in the same screen. More specifically, the display control unit 542 generates a screen in which the first portion 620 and the second portion 622 are arranged horizontally. Provision of the first group display field 710 in the first portion 620 and the provision of the second group display field 712 in the second portion 622, and the content displayed in the first group display field 710 and the second group display field 712 are as shown in Fig. 3A so that a description thereof is omitted.

As shown in Fig. 5B, the display control unit 342 generates a screen in which the first portion 620 is included in the second area 626. Provision of the first representative fire alarm display field 700, the first fire alarm display field 702, and the second fire alarm display field 704 in the first portion 620 and the content displayed in the first representative fire alarm display field 700, the first fire alarm display field 702, and the second fire alarm display field 704 are as shown in Fig. 3B so that a description thereof is omitted. As shown in Fig. 5C, the display control unit 342 generates a screen for history in which the first portion 620 is included in the second area 630. A transition to the screen for history can be made from a screen showing the representative information on each group or a screen showing the detailed information on one group. The content displayed in the screen for history is similar to that of Fig. 3C so that a description thereof is omitted.

### (4) Screen for push notice displayed on the controller 300

A description has been given of a case where a screen for notice is displayed on the display unit 318 by the user operation in the user operation unit 316 of the controller 300. Hereinafter, a process for realizing push notice in the controller 300 as in (2) will be described.

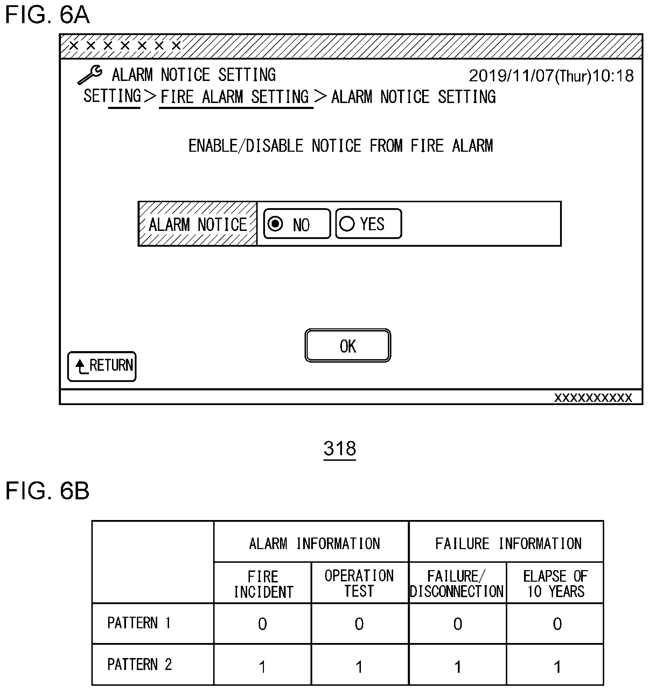

When the user uses the user operation unit 316, the display control unit 342 causes the display unit 318 to display a setting screen. Figs. 6A-6B show a summary of the setting made in the controller 300. Fig. 6A shows a setting screen displayed on the display unit 318. In the setting screen, alarm notice can be set to "ON" or "OFF". Unlike the setting in the controller 300, "operation/maintenance notification" and "operation test notice" are not set. In other words, a push notice for communicating fire incident, operation test, failure/disconnection, and elapse of 10 years is enabled or disabled. The user uses the user operation unit 316 to set "ON" or "OFF".

The setting unit 344 enables or disables a notice for communicating that the event information is available when the event information is received, by receiving a user operation in the user operation unit 316. In particular, the setting unit 344 enables or disables a notice for communicating that the event information aggregating fire incident, failure/disconnection, and elapse of 10 years is available. Fig. 6B shows a pattern of setting made in the setting unit 344. In this case, ON is indicated by "1", and OFF is indicated by "0". Pattern 1 is a case where alarm notice is set to OFF, and pattern 2 is a case where alarm notice is set to ON. Reference is made back to Fig. 1. When either pattern 1 or pattern 2 is set, the setting unit 344 stores the setting information indicating the setting result in the storage unit 314.

As described above, the input unit 340 receives the event information from the representative fire alarm 200 or the fire alarm 220 via the first communication unit 310. The display control unit 342 refers to the setting information associated with the terminal identification information stored in the storage unit 314. When the setting information is of pattern 1, the display control unit 342 terminates the process for push notice. When the setting information is of pattern 2, on the other hand, the display control unit 342 activates push notification. More specifically, the display control unit 342 displays a notice indicating the event information on the display unit 318. The notice is shown like the second message notice 640. Fig. 5D shows a screen for push notice displayed on the display unit 318. A notice window 680 is displayed, and a notice message is shown in the notice window 680. In this case, the event information comprises fire incident so that a message "fire incident" is shown.

In other words, when a notice is enabled by the setting unit 344, the display control unit causes, when the input unit 340 receives the event information, the display unit 318 to display a notice. Meanwhile, the display control unit 342 causes the display unit 318 to display a history of event information received by the input unit 340, i.e., the timeline, regardless of whether a notice is enabled or disabled by the setting unit 344. Thus, the provision of the input unit 340, the display control unit 342, and the setting unit 344 in one controller 300 causes the controller 300 to constitute a display system.

The device, the system, or the entity that executes the method according to the disclosure is provided with a computer. By causing the computer to run a program, the function of the device, the system, or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The plurality of electronic circuits may be integrated in one chip or provided in a plurality of chips. The plurality of chips may be aggregated in one device or provided in a plurality of apparatuses. The program is recorded in a non-transitory recording medium such as a computer-readable ROM, optical disk, and hard disk drive. The program may be stored in a recording medium in advance or supplied to a recording medium via wide area communication network including the Internet.

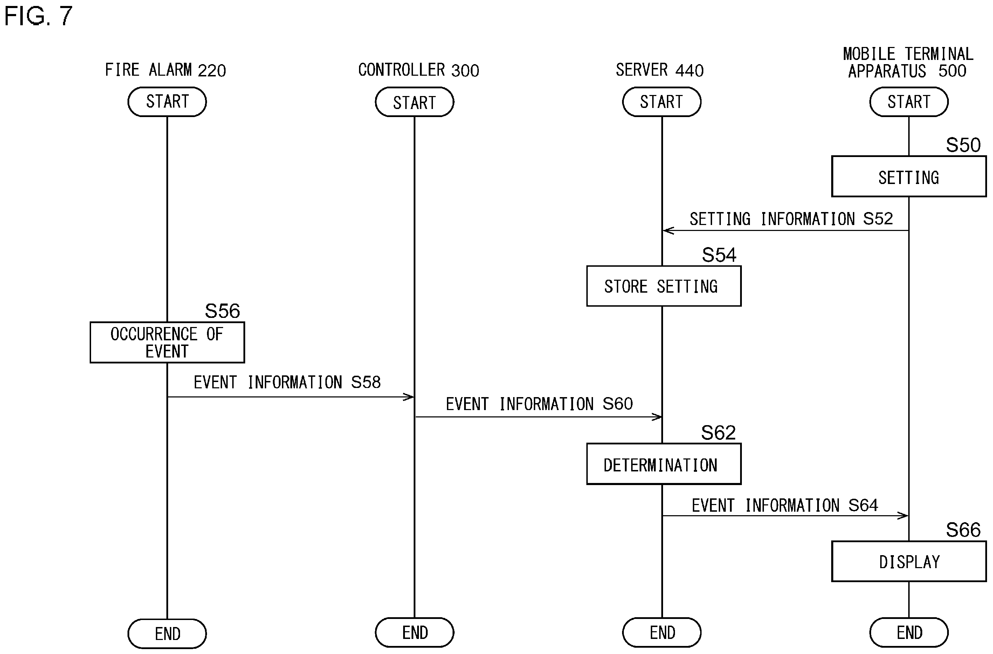

A description will be given of the operation of the control system 1000 having the configuration described above. Fig. 7 is a sequence chart showing a display procedure executed by the control system 1000. The mobile terminal apparatus 500 performs the push notice setting (S50). The mobile terminal apparatus 500 transmits the setting information to the server 440 (S52). The server 440 stores the setting information (S54). The fire alarm 220 detects the occurrence of an event (S56). The fire alarm 220 transmits the event information to the controller 300 (S58). The controller 300 transmits the event information to the server 440 (S60). The server 440 determines whether to activate push notification based on the setting information (S62). When the server 440 determines to activate push notification, the server 440 transmits the event information to the mobile terminal apparatus 500 (S64). The mobile terminal apparatus 500 displays a notice (S66).

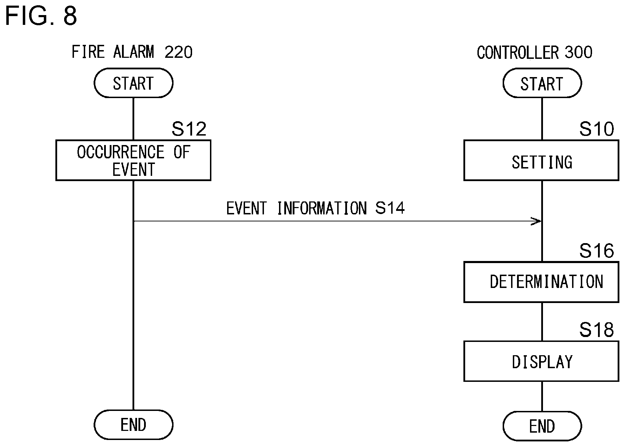

Fig. 8 is a sequence chart showing another display procedure executed by the control system 1000. The controller 300 performs the push notice setting (S10). The fire alarm 220 detects the occurrence of an event (S12). The fire alarm 220 transmits the event information to the controller 300 (S14). The controller 300 determines whether to activate push notification based on the setting information (S16). When the controller 300 determines to activate push notification, the controller 300 displays a notice (S18).

According to the embodiment, when a notice is enabled in the setting for enabling or disabling a notice for communicating that event information is available when the event information is received, a notice is displayed when the event information is received. Therefore, a notice can be displayed when a notice is necessary. When a notice is disabled in the setting for enabling or disabling a notice for communicating that event information is available when the event information is received, a notice is not displayed when the event information is received. Therefore, it is ensured that a notice is not displayed when a notice is not necessary. Further, the system switches to display or not to display a notice depending on the setting so that the timing of display of a notice can be adjusted. Further, a notice is displayed in a history of event information regardless of whether a notice is enabled or disabled. Therefore, the event information can be displayed even when a notice is disabled. Further, the system switches to display a notice immediately or display it in a history, depending on the setting. Therefore, the timing of display of a notice can be adjusted.

In particular, the setting unit 344 enables or disables a notice for communicating that the event information aggregating information on fire incident, information on operation test, and information on maintenance is available. Therefore, the setting can be simplified. In particular, the setting unit enables or disables a notice for communicating information on fire incident and information on maintenance and, separately, enables or disables a notice for communicating that information on operation test is available. Therefore, detailed setting can be made. The input unit 340, the setting unit 344, and the display control unit 342 are included in one apparatus so that the process is completed in one apparatus. Further, the input unit and the display control unit are included in the server 440, and the setting unit 544 is included in the mobile terminal apparatus 500 so that the processing volume in the mobile terminal apparatus 500 can be reduced.

One embodiment of the present disclosure is summarized below. A display system (300, 400, 500) according to an embodiment of the present disclosure includes: an input unit (340) that is configured to receive event information from a fire alarm (200, 220) provided in a facility (100); a setting unit (344, 544) that enables or disables a notice for communicating that the event information is available when the input unit (340) receives the event information; and a display control unit (342) that causes a display unit (318, 518) to display the notice when the setting unit (344, 544) enables a notice and when the input unit (340) receives the event information.

The display control unit (342) causes the display unit (318, 518) to display a history of the event information received by the input unit (340) regardless of whether a notice is enabled or disabled by the setting unit (344, 544).

The event information may include at least one of information on fire incident, information on operation test, and information on maintenance. The setting unit (344) enables or disables a notice for communicating that the event information, which aggregates the information on fire incident, the information on operation test, and the information on maintenance, is available.

The event information may include at least one of information on fire incident, information on operation test, and information on maintenance. The setting unit (544) enables or disables a notice for communicating that the information on fire incident and the information on maintenance are available and, separately, enables or disables a notice for communicating that the information on operation test is available.

The input unit (340), the setting unit (344), and the display control unit (342) are included in one apparatus.

The input unit and the display control unit are included in a server (440), and the setting unit (544) is included in an information terminal apparatus (500) configured to communicate with the server (440).

Another embodiment of the present disclosure relates to a display method. The includes: receiving event information from a fire alarm (200, 220) provided in a facility (100); enabling or disabling a notice for communicating that the event information is available when event information is received; and causing a display unit (318, 518) to display the notice when a notice is enabled and when the event information is received.

Described above is an explanation based on an exemplary embodiment. The embodiment is intended to be illustrative only and it will be understood by those skilled in the art that various modifications to constituting elements and processes could be developed and that such modifications are also within the scope of the present invention.

In the embodiment, the sensor is assumed to be the representative fire alarm 200 and the fire alarm 220. Alternatively, the sensor may be a gas alarm etc., or different types of alarms may coexist. According to this variation, the flexibility in configuration can be improved.

### [INDUSTRIAL APPLICABILITY]

According to the present disclosure, the timing of display of a notice can be adjusted.

### [REFERENCE SIGNS LIST]

100 facility, 200 representative fire alarm, 202 detection unit, 204 control unit, 206 communication unit, 220 fire alarm, 240 group, 300 controller, 310 first communication unit, 312 second communication unit, 314 storage unit, 316 user operation unit, 318 display unit, 330 processing unit, 340 input unit, 342 display control unit, 344 setting unit, 400 router, 420 network, 440 server, 500 mobile terminal apparatus, 510 communication unit, 514 storage unit, 516 user operation unit, 518 display unit, 530 processing unit, 540 input unit, 542 display control unit, 544 setting unit, 1000 control system

## Claims

1. A display system (300, 400, 500) comprising:
an input unit (340) that is configured to receive event information from a fire alarm (200, 220) provided in a facility (100);
**characterized by** further comprising
a setting unit (344, 544) that enables or disables a notice for communicating that the event information is available when the input unit (340) receives the event information; a display control unit (342) that causes a display unit (318, 518) to display the notice when the setting unit (344, 544) enables a notice and when the input unit (340) receives the event information,
wherein
the display control unit (342) causes the display unit (318, 518) to display a history of the event information received by the input unit (340) regardless of whether a notice is enabled or disabled by the setting unit (344, 544),
wherein the event information includes information on fire incident, information on operation test, and information on maintenance.

2. The display system (300, 400, 500) according to claim 1, wherein
the setting unit (344) enables or disables a notice for communicating that the event information, which aggregates the information on fire incident, the information on operation test, and the information on maintenance, is available.

3. The display system (300, 400, 500) according to claim 1, wherein
the setting unit (544) enables or disables a notice for communicating that the information on fire incident and the information on maintenance are available and, separately, enables or disables a notice for communicating that the information on operation test is available.

4. The display system (300, 400, 500) according to any one of claims 1 through 3, wherein
the input unit (340), the setting unit (344), and the display control unit (342) are included in one apparatus.

5. The display system (300, 400, 500) according to any one of claims 1 through 3, wherein
the input unit and the display control unit are included in a server apparatus (440), and
the setting unit (544) is included in an information terminal (500) configured to communicate with the server apparatus (440).

6. A display method comprising:
receiving event information from a fire alarm (200, 220) provided in a facility (100);
**characterized by** further comprising
enabling or disabling a notice for communicating that the event information is available when event information is received; and
causing a display unit (318, 518) to display the notice when a notice is enabled and when the event information is received,
causing the display unit (318, 518) to display a history of the received event information regardless of whether a notice is enabled or disabled,
wherein the event information includes at least one of information on fire incident, information on operation test, and information on maintenance.

7. A program comprising computer-implemented modules including:
a module that is configured to receive event information from a fire alarm (200, 220) provided in a facility (100);
**characterized by** further comprising
a module that enables or disables a notice for communicating that the event information is available when event information is received; and
a module that causes a display unit (318, 518) to display the notice when a notice is enabled and when the event information is received and causes the display unit (318, 518) to display a history of the received event information regardless of whether a notice is enabled or disabled,
wherein the event information includes at least one of information on fire incident, information on operation test, and information on maintenance.

## Patentansprüche

1. Anzeigesystem (300, 400, 500), aufweisend:
eine Eingabeeinheit (340), die konfiguriert ist, um Ereignisinformationen von einem Feueralarm (200, 220), der in einer Einrichtung (100) vorgesehen ist, zu empfangen;
**gekennzeichnet durch**
eine Einstelleinheit (344, 544), die eine Benachrichtigung aktiviert oder deaktiviert, um mitzuteilen, dass die Ereignisinformationen verfügbar sind, wenn die Eingabeeinheit (340) die Ereignisinformationen empfängt; eine Anzeigesteuereinheit (342), die eine Anzeigeeinheit (318, 518) veranlasst, die Benachrichtigung anzuzeigen, wenn die Einstelleinheit (344, 544) eine Benachrichtigung aktiviert und wenn die Eingabeeinheit (340) die Ereignisinformationen empfängt,
wobei
die Anzeigesteuereinheit (342) die Anzeigeeinheit (318, 518) veranlasst, einen Verlauf der Ereignisinformationen, die von der Eingabeeinheit (340) empfangen werden, anzuzeigen, unabhängig davon, ob eine Benachrichtigung durch die Einstelleinheit (344, 544) aktiviert oder deaktiviert ist,
wobei die Ereignisinformationen Informationen über einen Brandvorfall, Informationen über einen Funktionstest und Informationen über eine Wartungsarbeit enthalten.

2. Anzeigesystem (300, 400, 500) nach Anspruch 1, wobei
die Einstelleinheit (344) eine Benachrichtigung aktiviert oder deaktiviert, um mitzuteilen, dass die Ereignisinformationen, die die Informationen über einen Brandvorfall, die Informationen über einen Funktionstest und die Informationen über eine Wartungsarbeit zusammenfassen, verfügbar sind.

3. Anzeigesystem (300, 400, 500) nach Anspruch 1, wobei
die Einstelleinheit (544) eine Benachrichtigung aktiviert oder deaktiviert, um mitzuteilen, dass die Informationen über einen Brandvorfall und die Informationen über eine Wartungsarbeit verfügbar sind, und getrennt eine Benachrichtigung aktiviert oder deaktiviert, um mitzuteilen, dass die Informationen über einen Funktionstest verfügbar sind.

4. Anzeigesystem (300, 400, 500) nach einem der Ansprüche 1 bis 3, wobei
die Eingabeeinheit (340), die Einstelleinheit (344) und die Anzeigesteuereinheit (342) in einer Vorrichtung enthalten sind.

5. Anzeigesystem (300, 400, 500) nach einem der Ansprüche 1 bis 3, wobei
die Eingabeeinheit und die Anzeigesteuereinheit in einer Servervorrichtung (440) enthalten sind und
die Einstelleinheit (544) in einem Informationsterminal (500) enthalten ist, das konfiguriert ist, um mit der Servervorrichtung (440) zu kommunizieren.

6. Anzeigeverfahren, umfassend:
Empfangen von Ereignisinformationen von einem Feueralarm (200, 220), der in einer Einrichtung (100) vorgesehen wird;
**gekennzeichnet durch** ferner umfassend:
Aktivieren oder Deaktivieren einer Benachrichtigung, um mitzuteilen, dass die Ereignisinformationen verfügbar sind, wenn Ereignisinformationen empfangen werden; und
Veranlassen einer Anzeigeeinheit (318, 518), die Benachrichtigung anzuzeigen, wenn eine Benachrichtigung aktiviert ist und wenn die Ereignisinformationen empfangen werden,
Veranlassen der Anzeigeeinheit (318, 518), einen Verlauf der empfangenen Ereignisinformationen anzuzeigen, unabhängig davon, ob eine Benachrichtigung aktiviert oder deaktiviert ist,
wobei die Ereignisinformationen mindestens eines von Informationen über einen Brandvorfall, Informationen über einen Funktionstest und Informationen über eine Wartungsarbeit enthalten.

7. Programm, das computerimplementierte Module aufweist, zu denen gehören:
ein Modul, das konfiguriert ist, um Ereignisinformationen von einem Feueralarm (200, 220), der in einer Einrichtung (100) vorgesehen ist, zu empfangen;
**gekennzeichnet durch** ferner umfassend:
ein Modul, das eine Benachrichtigung aktiviert oder deaktiviert, um mitzuteilen, dass die Ereignisinformationen verfügbar sind, wenn Ereignisinformationen empfangen werden; und
ein Modul, das eine Anzeigeeinheit (318, 518) veranlasst, die Benachrichtigung anzuzeigen, wenn eine Benachrichtigung aktiviert ist und wenn die Ereignisinformationen empfangen werden, und das die Anzeigeeinheit (318, 518) veranlasst, einen Verlauf der empfangenen Ereignisinformationen anzuzeigen, unabhängig davon, ob eine Benachrichtigung aktiviert oder deaktiviert ist,
wobei die Ereignisinformationen mindestens eines von Informationen über einen Brandvorfall, Informationen über einen Funktionstest und Informationen über eine Wartungsarbeit enthalten.

## Revendications

1. Système d'affichage (300, 400, 500), comprenant :
une unité d'entrée (340) qui est configurée pour recevoir des informations d'événement provenant d'une alarme incendie (200, 220) prévue dans une installation (100) ;
**caractérisé en ce qu'**il comprend en outre :
une unité de réglage (344, 544) qui active ou désactive une notification destinée à communiquer que les informations d'événement sont disponibles lorsque l'unité d'entrée (340) reçoit les informations d'événement ; une unité de commande d'affichage (342) qui amène une unité d'affichage (318, 518) à afficher la notification lorsque l'unité de réglage (344, 544) active une notification et lorsque l'unité d'entrée (340) reçoit les informations d'événement,
dans laquelle
l'unité de commande d'affichage (342) amène l'unité d'affichage (318, 518) à afficher un historique des informations d'événement reçues par l'unité d'entrée (340), qu'une notification soit activée ou désactivée par l'unité de réglage (344, 544),
dans lesquelles les informations d'événement comprennent des informations sur un incident d'incendie, des informations sur un test de fonctionnement, et des informations sur la maintenance.

2. Système d'affichage (300, 400, 500) selon la revendication 1, dans lequel
l'unité de réglage (344) active ou désactive une notification destinée à communiquer que les informations d'événement, qui agrègent les informations sur l'incident d'incendie, les informations sur le test de fonctionnement, et les informations sur la maintenance, sont disponibles.

3. Système d'affichage (300, 400, 500) selon la revendication 1, dans lequel
l'unité de réglage (544) active ou désactive une notification destinée à communiquer que les informations sur l'incident d'incendie et les informations sur la maintenance sont disponibles et, séparément, active ou désactive une notification destinée à communiquer que les informations sur le test de fonctionnement sont disponibles.

4. Système d'affichage (300, 400, 500) selon l'une quelconque des revendications 1 à 3, dans lequel
l'unité d'entrée (340), l'unité de réglage (344) et l'unité de commande d'affichage (342) sont incluses dans un seul appareil.

5. Système d'affichage (300, 400, 500) selon l'une quelconque des revendications 1 à 3, dans lequel
l'unité d'entrée et l'unité de commande d'affichage sont incluses dans un appareil serveur (440), et
l'unité de réglage (544) est incluse dans un terminal d'information (500) configuré pour communiquer avec l'appareil serveur (440).

6. Procédé d'affichage, comprenant le fait de :
recevoir des informations d'événement provenant d'une alarme incendie (200, 220) prévue dans une installation (100) ;
**caractérisé en ce qu'**il comprend en outre le fait de :
activer ou désactiver une notification destinée à communiquer que les informations d'événement sont disponibles lorsque les informations d'événement sont reçues ; et
amener une unité d'affichage (318, 518) à afficher la notification lorsque la notification est activée et lorsque les informations d'événement sont reçues,
amener l'unité d'affichage (318, 518) à afficher un historique des informations d'événement reçues, que la notification soit activée ou désactivée,
dans lesquelles les informations d'événement comprennent au moins l'une parmi des informations sur un incident d'incendie, des informations sur un test de fonctionnement, et des informations sur la maintenance.

7. Programme comprenant des modules mis en œuvre par ordinateur, comprenant :
un module qui est configuré pour recevoir des informations d'événement provenant d'une alarme incendie (200, 220) prévue dans une installation (100) ;
**caractérisé en ce qu'**il comprend en outre :
un module qui active ou désactive une notification destinée à communiquer que les informations d'événement sont disponibles lorsque les informations d'événement sont reçues ; et
un module qui amène une unité d'affichage (318, 518) à afficher la notification lorsque la notification est activée et lorsque les informations d'événement sont reçues, et qui amène l'unité d'affichage (318, 518) à afficher un historique des informations d'événement reçues, que la notification soit activée ou désactivée,
dans lesquelles les informations d'événement comprennent au moins l'une parmi des informations sur un incident d'incendie, des informations sur un test de fonctionnement, et des informations sur la maintenance.
